# EUROPEAN PATENT SPECIFICATION

(11) **EP 4 323 301 B1**
(45) Date of publication and mention of the grant of the patent: **19.11.2025**
(21) Application number: 22788537.3
(22) Date of filing: 01.04.2022
(51) Int. Cl.: B66C 1/36, F16B 45/02, B66C 1/34, F16B 45/04

(54) **LIFTING HOOK AND METHOD FOR ATTACHING A LIFTING HOOK TO A SUPPORT MEMBER**
HEBEHAKEN UND VERFAHREN ZUR BEFESTIGUNG EINES HEBEHAKENS AN EINEM STÜTZELEMENT
CROCHET DE LEVAGE ET PROCÉDÉ DE FIXATION D'UN CROCHET DE LEVAGE À UN ÉLÉMENT SUPPORT

(30) Priority: 13.04.2021 SE 2150455
(43) Date of publication of application: 21.02.2024
(73) Proprietor: Hook & Moor AB, 475 41 Hönö (SE)
(72) Inventor: CARLSON, Eric, 475 41 Hönö (SE)
(74) Representative: Zacco Sweden AB
(86) International application number: PCT/SE2022/050330
(87) International publication number: WO 2022/220718

(56) References cited:
- CN-B- 105 305 317
- CN-U- 204 162 289
- GB-A- 2 365 846
- JP-A- 2016 013 073
- JP-B1- 4 865 927
- SE-C2- 506 432
- SU-A1- 1 390 128

## Description

### TECHNICAL FIELD

The present invention relates to a lifting hook provided with a line guiding means. The lifting hook is carryable and is adapted to be attached to a support member manually by an operator using a guideline.

### BACKGROUND ART

In some industries, especially such industries that handles heavy items, the items may have to be lifted or moved. Often, an overhead crane or a bridge crane arranged in the building can be used. Sometimes, a portable crane may be used, but in confined spaces, a portable crane may not be possible to use. In these cases, an overhead support structure in the form of a rod or a lifting hook may be mounted to e.g. the ceiling of the location, by which the heavy item can be lifted by the use of a lifting aid, e.g. a block and tackle, a rope and pulley system or a hoist.

However, to be able to handle a heavy weight, the lifting aid itself must be relatively strong and thus heavy. With the support member mounted overhead, often several meters above ground, it may be difficult to attach the upper end of the lifting aid to the support member. The lifting aid may e.g. comprise a hook that has to be hung on the support member or through a lifting eye. The hook and a corresponding chain or wire may be too heavy to lift into place by an operator, especially if the operator have to climb a ladder to reach the support member.

JP 4865927 B1 discloses a removable coupling device that is attached to a lifting hook when the lifting hook is to be attached to a metal fitting of some kind. When the hook is attached, the removable coupling device is detached from the lifting hook by pulling a second wire. The shown solution works well for attaching the lifting hook, but cannot be used if the lifting hook is to be removed again. There is further a risk that the coupling device may detach during the attachment of the lifting hook, which may cause injuries. JP 2016013073 A discloses a tow hook for e.g. fallen trees, where a guide rope is arranged around the tree and where the tow hook is threaded through a ring of the guide rope. A guideline is loosely attached to a fixed support hook on the tow hook. This solution may work for smaller tow hooks, but there is a risk that the guideline will come loose during the operation. CN105305317B discloses a lifting hook according to the preamble of claim 1.

There is therefore a need for a lifting hook that can manually be attached to an overhead support member by an operator in a secure way.

### DISCLOSURE OF INVENTION

An object of the invention is therefore to provide a lifting hook that is adapted to be attached manually to an overhead support member by the use of a guideline. A further object is to provide a lifting hook arrangement comprising a guideline. A further object is to provide a method for manually attaching a lifting hook to an overhead support member.

The solution to the problem according to the invention is defined by the lifting hook according to claim 1, by the lifting hook arrangement according to claim 11, which contains the lifting hook according to claim 1, and by the method according to claim 12.

The other claims contain advantageous embodiments and further developments of the lifting hook and the method.

In a lifting hook adapted to be attached to a support member remotely and manually by an operator, where the lifting hook comprises a hook eye and a hook, where the hook comprises a body and a tip having a tip end, the object of the invention is achieved in that the lifting hook comprises a line guiding means permanently and pivotable attached to the tip, where the line guiding means is arranged to support or hold a guideline.

By this first embodiment of the lifting hook according to the invention, a lifting hook that is easy and safe to attach to a remote support member is provided.

The lifting hook can be used when a lifting hook has to be attached to e.g. a support eye mounted out of reach of an operator. The support member may be a lifting eye, a rod mounted to a structure, a part of a lattice, a part of a framed structure or the like. The lifting hook is carryable such that it can be handled by a single operator. The term "carryable" means that the lifting hook can be carried and handled by one person. One definition of the term "carryable" may be a weight below 32 kg, which according to international regulation is the greatest weight of aircraft luggage that may be handled by the aircraft staff. The weight of the lifting hook is thus advantageously less than 32 kg, more advantageously less than 25 kg and most advantageously less than 20 kg.

The lifting hook is provided with a line guiding means permanently and pivotable attached to the tip of the lifting hook. The line guiding means is attached to the tip such that it extends outside of the contact surface of the tip end. In this way, the line guiding means will constitute a bearing surface for the tip end when the hook is attached to a support member. During the attachment of the hook to the support member, the line guiding means will glide on the surface of the support member, and since the line guiding means extends outside of the contact surface of the tip end, the tip end will not catch or snag the support member during the attachment. A guideline is either attached to the line guiding means or is support by the line guiding means, such that the lifting hook can be pulled towards and over the support member by the guideline.

### BRIEF DESCRIPTION OF DRAWINGS

The invention will be described in greater detail in the following, with reference to the embodiments that are shown in the attached drawings, in which
- Fig. 1: shows a first example of a lifting hook according to the invention,
- Fig. 2a-b: show details of the first example of a lifting hook according to the invention,
- Fig. 3: shows a second example of a lifting hook according to the invention,
- Fig. 4a-e: show a lifting hook assembly being attached to an overhead support member.

### MODES FOR CARRYING OUT THE INVENTION

The embodiments of the invention with further developments described in the following are to be regarded only as examples and are in no way to limit the scope of the protection provided by the patent claims.

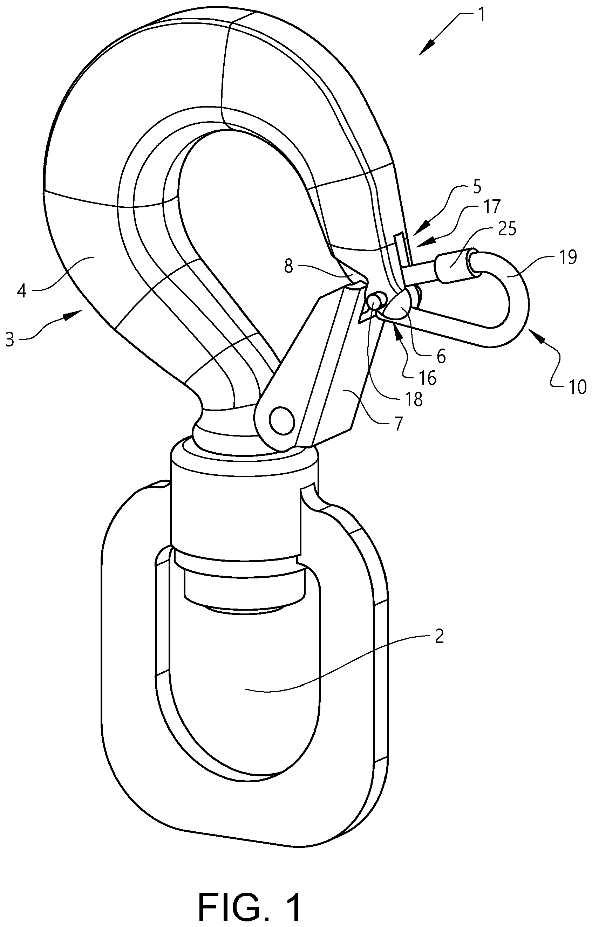

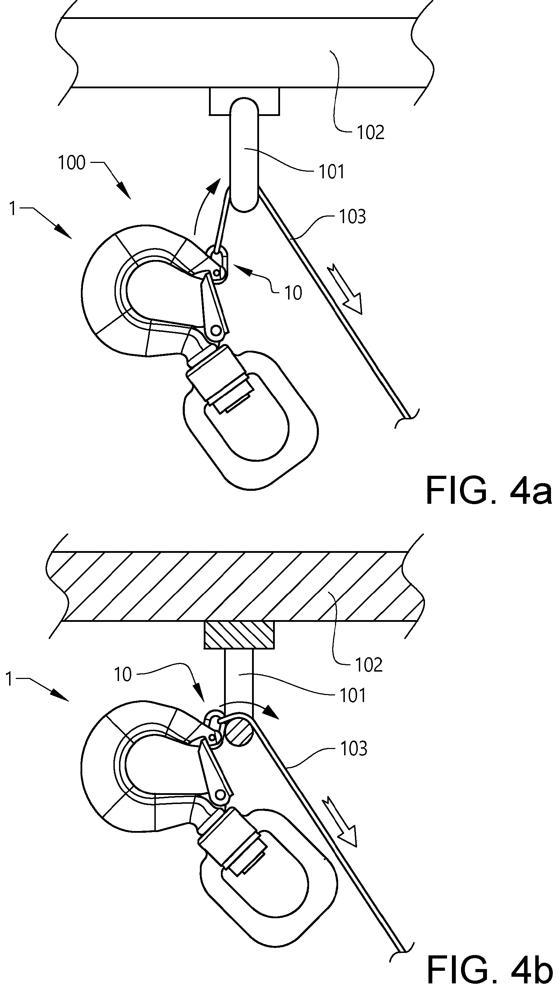

Figs. 1 to 3 show different examples of a lifting hook according to the invention, and Fig. 4a-e show a lifting hook being attached to an overhead support member.

A lifting hook 1 according to the invention is provided with a line guiding means 10 arranged at the tip 5 of the lifting hook. The line guiding means is adapted to hold a guide line that is to be used when attaching a lifting hook to an overhead support member, e.g. a rod or a lifting eye arranged e.g. at the ceiling of a building. The guideline is threaded over or through the support member. The guideline is a thin flexible member and can be a wire, a string, a rope, a chain or the like. By pulling the guideline, the lifting hook is moved to the support member. By attaching the line guiding means at the tip of the lifting hook such that the line guiding means extends outside of the contact surface of the tip end of the lifting hook, the tip end of the hook can be pulled over the support member such that the hook is attached to the support member. This simplifies the hanging of a lifting hook considerably. Further, the safety of the operator is enhanced, since the operator can attach the lifting hook from below, standing on the floor of the building. In this way, no heavy lifting is necessary. The lifting hook may also be attached to a structure below the user, e.g. to an underwater structure or a structure arranged at a floor below the user.

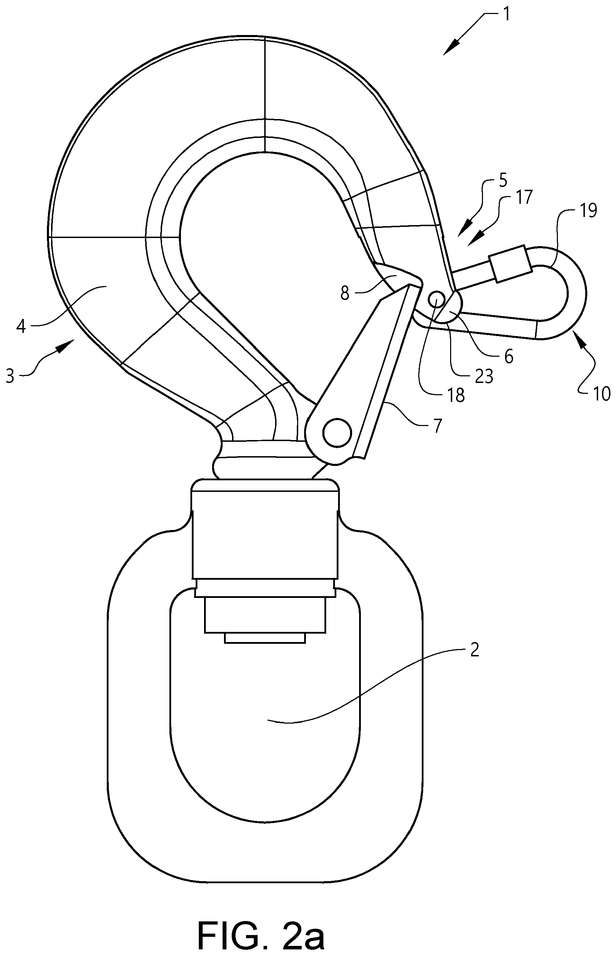

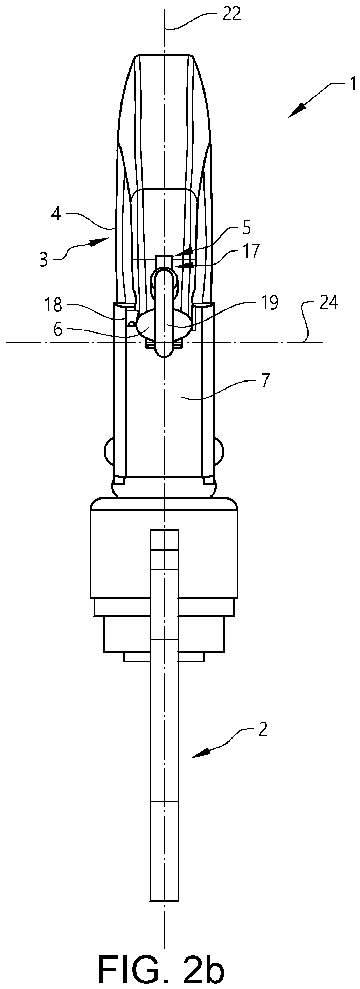

Figs. 1 and 2 show a first example of a lifting hook 1 according to the invention. The lifting hook 1 comprises a hook eye 2 and a hook 3, where the hook 3 comprises a body 4 and a tip 5 having a tip end 6. The body of the hook is the part of the hook that is adapted to carry the nominal load of the lifting hook. The tip of the hook is the part of the hook that is not adapted to carry the nominal load. The tip end is the part of the tip that is positioned outside of the recess 8 for the safety latch 7 and outside of the bearing surface for the safety latch 7. The hook eye is adapted to connect the hook to a lifting means such as a chain or wire. The hook eye may be fixed or may swivel. The safety latch is spring-loaded and the hook is in the shown example provided with recesses 8 on each side of the tip in which the outer end branches of the safety latch can rest.

The tip end 6 of the lifting hook is in this example provided with a central slit 17 such that two tip end arms are created. The slit 17 is parallel with the centre plane 22 of the lifting hook. A hole 16 is provided through the two tip end arms, perpendicular to the slit 17. A pin 18 is inserted through the hole 16. A line guiding means 10 in the form of a carbine hook 19 or safety hook is arranged in the slit and is suspended by the pin. In this way, the carbine hook is permanently and pivotable attached to the tip. The line guiding means extends outside of the contact surface 23 of the tip end 6. The contact surface plane 24 of the contact surface 23 is perpendicular to the centre plane 22 of the lifting hook. In this example, the carbine hook is provided with a locking member 25 such that a guideline can be securely attached to the line guiding means. A guideline 103 can be attached to the carbine hook or can be routed through the carbine hook.

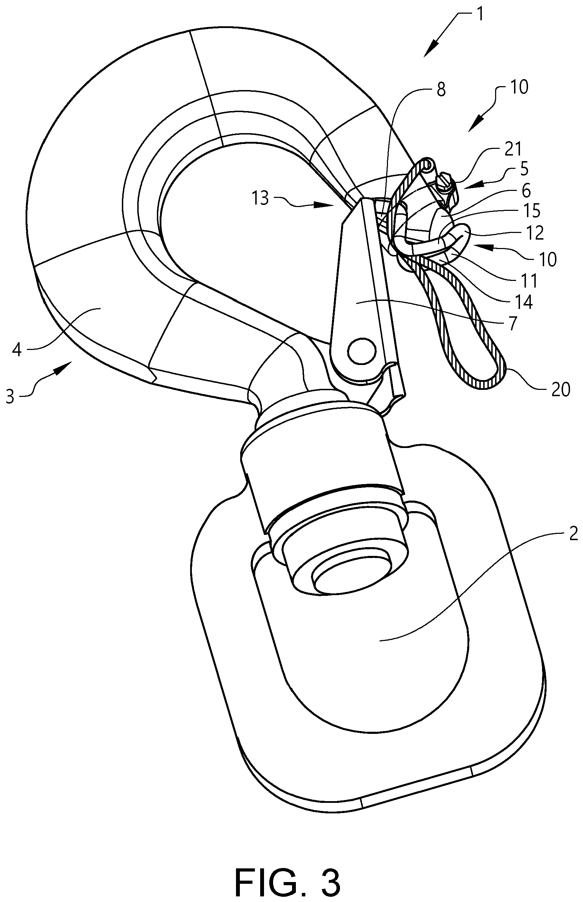

Fig. 3 shows a second example of a lifting hook according to the invention. In this example, the line guiding means 10 constitutes a bent rigid wire 11 and a flexible wire loop 20. The bent wire 11 and the wire loop 20 are mounted to the tip, in the shown example with a tube clamp 21. The bent wire 20 has a closed end 12 that is arranged at the front of the tip end 6, and that is positioned outside of the contact surface of the tip end. In this way, the lifting hook will glide on the first leg 14 and the second leg 15 when the lifting hook is attached to a support member. The open end 13 of the bent wire is attached in the recess 8. The first leg 14 and the second leg 15 of the bent wire 20 are arranged outside of the wire loop, such that the wire loop is positioned between the first leg and second leg. A guideline 103 can be attached to the wire loop or can be routed through the wire loop.

The line guiding means is used when the lifting hook is to be attached to a support member of some sort, e.g. arranged overhead of the operator. In order to allow the tip end of the hook to pass over the support member without catching or getting stuck on the support member, it is important that the line guiding means extends outside of the contact surface of the tip end, such that the line guiding means will glide against the support member during the attachment of the lifting hook on the support member. The tip end will at the same moment not contact the support member. When a carbine hook is used as a line guiding means, the carbine hook will act as an extension of the guideline and will further act as a small lever that helps the tip end of the hook over the support member.

In Figs. 4a to 4e, an example of a lifting hook being attached to a lifting eye is shown, but the lifting hook may be attached to any suitable support member. To be able to attach the lifting hook, a guideline is attached to the line guiding means of the lifting hook, in the shown example via a carbine hook. The guideline is either attached to the line guiding means or is threaded through the line guiding means and is used in a double folded manner.

The purpose of attaching a lifting hook to a support member is to be able to lift an item by the lifting hook. A chain or wire of some type (not shown) is thus attached to the hook eye 2 of the lifting hook before the lifting hook is attached to the support member. In one example, the lifting hook is used to attach a lifting hook that is used to assemble the wires for an elevator to the upper elevator support. In this case, a wire pulley with an additional guideline is attached to the hook eye of the lifting hook. With the lifting hook in place, the guideline of the wire pulley is used to pull the elevator wires to the upper elevator support. The upper elevator support may be positioned e.g. 4 - 6 meters above the upper landing platform for the elevator, and with an angle to the landing platform. By threading a guideline through the upper elevator support and attaching a lifting hook to the upper support, the installation of an elevator is simplified considerably. The installation can thus be made both quicker and safer.

The guideline may be threaded over the support member or through a lifting eye with some kind of threading tool, or an operator may thread the guideline through the lifting eye standing on a ladder. In one example, the guideline is threaded through or over the support member with a boat hook from Hook&Moor. In this way, the guideline can be threaded through a lifting eye by an operator standing on the floor.

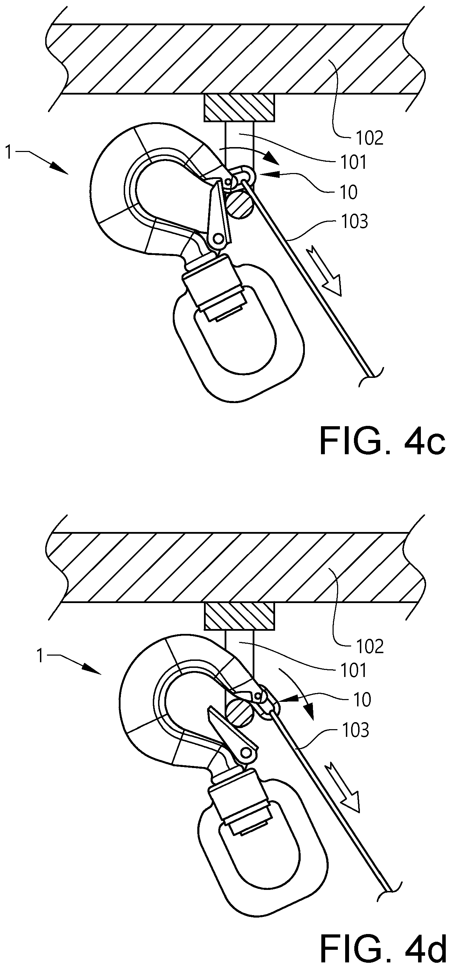

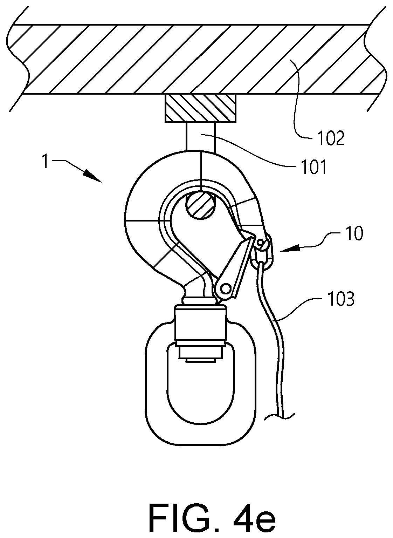

When the guideline is threaded through the lifting eye, the operator pulls the guideline such that the lifting hook comes closer to the lifting eye, as shown in Fig. 4a, until the line guiding means bears on the lifting eye, as shown in Fig. 4b, and further until the safety latch bears on the lifting eye, as shown in Fig. 4c. Here, the line guiding means will also act as a lever for the lifting hook, which simplifies the attachment of the lifting hook and reduces the risk that the tip of the lifting hook will be caught on the lifting eye. By continuing the pulling of the guideline, the safety latch of the lifting hook will open and the line guiding means will be pulled over the lifting eye, as shown in Fig. 4d. The lifting hook can now fall down on the lifting eye and hangs secure on the lifting eye, as shown in Fig. 4e. The item to be lifted can now be lifted.

The lifting hook may also be used to attach a lifting hook on other support members, such as to insert a lifting hook in a submarine foundation eye. In this case, the lifting hook may be used to anchor a vessel or the like. The foundation eye may e.g. be positioned a few meters below the waterline, and a normal manner to attach the lifting hook to the foundation eye would be to use a diver to attach the lifting hook. With the inventive lifting hook, a guideline can be threaded through the foundation eye and the lifting hook can be attached to the foundation eye by pulling the guideline. This simplifies the attachment of lifting hooks to support members positioned below the operator.

The invention is not to be regarded as being limited to the embodiments described above, a number of additional variants and modifications being possible within the scope of the subsequent patent claims.

### REFERENCE SIGNS

- 1:: Lifting hook
- 2:: Hook eye
- 3:: Hook
- 4:: Body
- 5:: Tip
- 6:: Tip end
- 7:: Safety latch
- 8:: Recess
- 10:: Line guiding means
- 11:: Bent steel wire
- 12:: Closed end
- 13:: Open end
- 14:: First leg
- 15:: Second leg
- 16:: Hole
- 17:: Central slit
- 18:: Pin
- 19:: Carbine hook
- 20:: Wire loop
- 21:: Tube clamp
- 22:: Centre plane
- 23:: Contact surface
- 24:: Contact surface plane
- 25:: Locking member

- 100:: Lifting hook arrangement
- 101:: Support member
- 102:: Structure
- 103:: Guideline
- 104:: Line threading means

## Claims

1. A lifting hook (1) adapted to be attached to a support member (101) remotely and manually by an operator, where the lifting hook (1) comprises a hook (3), where the hook (3) comprises a body (4) and a tip (5) having a tip end (6), wherein the lifting hook (1) comprises a line guiding means (10) permanently and pivotable attached to the tip (5), where the line guiding means (10) is arranged to support or hold a guideline (103), **characterised in that** the lifting hook (1) comprises a hook eye (2), and **in that** the lifting hook (1) comprises a safety latch (7).

2. Lifting hook according to claim 1, wherein the tip end (6) is provided with a contact surface (23) that is perpendicular to a centre plane (22) of the lifting hook (1), and where the line guiding means (10) extends outside of the contact surface (23) of the tip end (6).

3. Lifting hook according to claim 1 or 2, wherein the line guiding means (10) constitutes a pivotable lever for the guide line (103).

4. Lifting hook according to any of claims 1 to 3, wherein the line guiding means (10) is positioned in a central slit (17) of the tip end (6), and that the line guiding means (10) is attached to the tip end (6) by a pin (18) that is positioned through a hole (16) that is perpendicular to the slit (17).

5. Lifting hook according to claim 4, wherein the line guiding means (10) is a carbine hook (19).

6. Lifting hook according to claim 4 or 5, wherein the carbine hook (19) comprises a locking member (25).

7. Lifting hook according to any of claims 1 to 3, wherein the line guiding means (10) is a U-shaped bent steel wire (11) and a flexible wire loop (20) attached to the tip (5).

8. Lifting hook according to claim 7, wherein the wire loop (20) is attached inside the bent steel wire (11).

9. Lifting hook according to any of claims 1 to 8, wherein the lifting hook (1) is carryable.

10. Lifting hook according to claim 9, wherein the lifting hook (1) weighs less than 20 kg.

11. Lifting hook arrangement (100) for remotely and manually attaching a lifting hook (1) to a support member (101), **characterized in that** it comprises a lifting hook (1) according to any of claims 1 to 10, wherein the lifting hook arrangement (100) further comprises a guideline (103) attached to the line guiding means (10) of the lifting hook (1).

12. Method for remotely and manually attaching a lifting hook to a support member, wherein the lifting hook (1) comprises a safety latch (7), comprising the following steps:
- attaching a guideline to a line guiding means that is permanently and pivotable attached to a tip of the lifting hook,
- threading the guideline over the remote support member,
- manually pulling the free end of the guideline until the line guiding means bears on the support member,
- further pulling the guide line such that the line guiding means glides on the support member,
- further pulling the guideline until the hook is attached to the support member.

13. Method according to claim 12, comprising the additional step of: attaching a chain or wire to the hook eye of the lifting hook prior to threading the guideline over the support member.

14. Method according to claim 12 or 13, where the guideline is threaded over the remote support member with a line threading means.

## Patentansprüche

1. Hebehaken (1), der dazu angepasst ist, an einem Stützelement (101) ferngesteuert und manuell durch einen Bediener befestigt zu werden, wobei der Hebehaken (1) einen Haken (3) umfasst, wobei der Haken (3) einen Körper (4) und eine Spitze (5), die ein Spitzenende (6) aufweist, umfasst, wobei der Hebehaken (1) eine Leinenführungseinrichtung (10) umfasst, die dauerhaft und schwenkbar an der Spitze (5) befestigt ist, wobei die Leinenführungseinrichtung (10) dazu angeordnet ist, eine Führungsleine (103) zu stützen oder zu halten, **dadurch gekennzeichnet, dass** der Hebehaken (1) eine Hakenöse (2) umfasst und dass der Hebehaken (1) eine Sicherheitsklinke (7) umfasst.

2. Hebehaken nach Anspruch 1, wobei das Spitzenende (6) mit einer Kontaktfläche (23) bereitgestellt ist, die senkrecht zu einer Mittelebene (22) des Hebehakens (1) verläuft, und wobei die Leinenführungseinrichtung (10) sich außerhalb der Kontaktfläche (23) des Spitzenendes (6) erstreckt.

3. Hebehaken nach Anspruch 1 oder 2, wobei die Leinenführungseinrichtung (10) einen schwenkbaren Hebel für die Führungsleine (103) darstellt.

4. Hebehaken nach einem der Ansprüche 1 bis 3, wobei die Leinenführungseinrichtung (10) in einem zentralen Schlitz (17) des Spitzenendes (6) positioniert ist und die Leinenführungseinrichtung (10) an dem Spitzenende (6) durch einen Stift (18) befestigt ist, der durch ein Loch (16) hindurch positioniert ist, das senkrecht zu dem Schlitz (17) verläuft.

5. Hebehaken nach Anspruch 4, wobei die Leinenführungseinrichtung (10) ein Karabinerhaken (19) ist.

6. Hebehaken nach Anspruch 4 oder 5, wobei der Karabinerhaken (19) ein Verriegelungselement (25) umfasst.

7. Hebehaken nach einem der Ansprüche 1 bis 3, wobei die Leinenführungseinrichtung (10) aus einem U-förmig gebogenen Stahldraht (11) und einer flexiblen Drahtschlaufe (20), die an der Spitze (5) befestigt ist, besteht.

8. Hebehaken nach Anspruch 7, wobei die Drahtschlaufe (20) im Inneren des gebogenen Stahldrahtes (11) befestigt ist.

9. Hebehaken nach einem der Ansprüche 1 bis 8, wobei der Hebehaken (1) tragbar ist.

10. Hebehaken nach Anspruch 9, wobei der Hebehaken (1) weniger als 20 kg wiegt.

11. Hebehakenanordnung (100) zum ferngesteuerten und manuellen Befestigen eines Hebehakens (1) an einem Stützelement (101), **dadurch gekennzeichnet, dass** sie einen Hebehaken (1) nach einem der Ansprüche 1 bis 10 umfasst, wobei die Hebehakenanordnung (100) ferner eine Führungsleine (103) umfasst, die an der Leinenführungseinrichtung (10) des Hebehakens (1) befestigt ist.

12. Verfahren zum ferngesteuerten und manuellen Befestigen eines Hebehakens an einem Stützelement, wobei der Hebehaken (1) eine Sicherheitsklinke (7) umfasst, die folgenden Schritte umfassend:
- Befestigen einer Führungsleine an einer Leinenführungseinrichtung, die dauerhaft und schwenkbar an einer Spitze des Hebehakens befestigt ist,
- Fädeln der Führungsleine über das entfernte Stützelement,
- manuelles Ziehen des freien Endes der Führungsleine, bis die Leinenführungseinrichtung an dem Stützelement anliegt,
- weiteres Ziehen der Führungsleine, so dass die Leinenführungseinrichtung auf dem Stützelement gleitet,
- weiteres Ziehen der Führungsleine, bis der Haken an dem Stützelement befestigt ist.

13. Verfahren nach Anspruch 12, umfassend den zusätzlichen Schritt von: Befestigen einer Kette oder eines Drahtes an der Hakenöse des Hebehakens vor dem Fädeln der Führungsleine über das Stützelement.

14. Verfahren nach Anspruch 12 oder 13, wobei die Führungsleine mit einer Leineneinfädeleinrichtung über das entfernte Stützelement gefädelt wird.

## Revendications

1. Crochet de levage (1) conçu pour être fixé à un élément de support (101) à distance et manuellement par un opérateur, le crochet de levage (1) comprenant un crochet (3), le crochet (3) comprenant un corps (4) et une pointe (5) ayant une extrémité de pointe (6), le crochet de levage (1) comprenant un moyen de guidage de ligne (10) fixé de manière permanente et pivotante à la pointe (5), le moyen de guidage de ligne (10) étant agencé pour supporter ou maintenir une ligne de guidage (103), **caractérisé en ce que** le crochet de levage (1) comprend un œillet de crochet (2), et **en ce que** le crochet de levage (1) comprend un loquet de sécurité (7).

2. Crochet de levage selon la revendication 1, dans lequel l'extrémité de pointe (6) est pourvue d'une surface de contact (23) qui est perpendiculaire à un plan central (22) du crochet de levage (1), et où le moyen de guidage de ligne (10) s'étend à l'extérieur de la surface de contact (23) de l'extrémité de pointe (6).

3. Crochet de levage selon la revendication 1 ou 2, dans lequel le moyen de guidage de ligne (10) constitue un levier pivotant pour la ligne de guidage (103).

4. Crochet de levage selon l'une quelconque des revendications 1 à 3, dans lequel le moyen de guidage de ligne (10) est positionné dans une fente centrale (17) de l'extrémité (6) et est fixé à l'extrémité (6) par une goupille (18) positionnée dans un trou (16) perpendiculaire à la fente (17).

5. Crochet de levage selon la revendication 4, dans lequel le moyen de guidage de ligne (10) est un mousqueton (19).

6. Crochet de levage selon la revendication 4 ou 5, dans lequel le mousqueton (19) comprend un élément de verrouillage (25).

7. Crochet de levage selon l'une quelconque des revendications 1 à 3, dans lequel le moyen de guidage de ligne (10) est constitué d'un fil d'acier plié en U (11) et d'une boucle de fil flexible (20) fixée à la pointe (5).

8. Crochet de levage selon la revendication 7, dans lequel la boucle de fil (20) est fixée à l'intérieur du fil d'acier plié (11).

9. Crochet de levage selon l'une quelconque des revendications 1 à 8, dans lequel le crochet de levage (1) est transportable.

10. Crochet de levage selon la revendication 9, dans lequel le crochet de levage (1) pèse moins de 20 kg.

11. Agencement de crochet de levage (100) permettant de fixer à distance et manuellement un crochet de levage (1) à un élément de support (101), **caractérisé en ce qu'**il comprend un crochet de levage (1) selon l'une quelconque des revendications 1 à 10, l'agencement de crochet de levage (100) comprenant en outre une ligne de guidage (103) fixée au moyen de guidage de ligne (10) du crochet de levage (1).

12. Procédé de fixation à distance et manuelle d'un crochet de levage à un élément de support, dans lequel le crochet de levage (1) comprend un loquet de sécurité (7), comprenant les étapes suivantes :
- la fixation d'une ligne de guidage à un dispositif de guidage de ligne fixé de manière permanente et pivotante à l'extrémité du crochet de levage,
- l'enfilage de la ligne de guidage sur l'élément de support distant,
- la traction manuelle de l'extrémité libre de la ligne de guidage jusqu'à ce que le moyen de guidage de ligne s'appuie sur l'élément de support,
- la traction supplémentaire de la ligne de guidage de sorte que le moyen de guidage de ligne glisse sur l'élément de support,
- la traction supplémentaire de la ligne de guidage jusqu'à ce que le crochet soit fixé à l'élément de support.

13. Procédé selon la revendication 12, comprenant l'étape supplémentaire consistant à attacher une chaîne ou un fil à l'œillet du crochet de levage avant d'enfiler la ligne de guidage sur l'élément de support.

14. Procédé selon la revendication 12 ou 13, dans lequel la ligne de guidage est enfilée sur l'élément de support à distance avec un moyen d'enfilage de ligne.
